Europäisches Patentamt

(19) European Patent Office

Office européen des brevets

(11) Numéro de publication: **0 241 356**
**B1**

(12) **FASCICULE DE BREVET EUROPEEN**

(45) Date de publication du fascicule du brevet:
18.07.90

(51) Int. Cl.⁵: **C03B 29/04**

(21) Numéro de dépôt: **87400717.2**

(22) Date de dépôt: **01.04.87**

(54) **Amélioration aux techniques de chauffage de feuilles de verre.**

(30) Priorité: **09.04.86 FR 8605057**

(43) Date de publication de la demande:
**14.10.87 Bulletin 87/42**

(45) Mention de la délivrance du brevet:
**18.07.90 Bulletin 90/29**

(84) Etats contractants désignés:
**BE CH DE ES FR GB IT LI SE**

(56) Documents cités:
**EP-A- 0 078 135**
**FR-A- 2 118 855**
**FR-A- 2 180 830**
**US-A- 3 744 985**
**US-A- 3 818 181**

**GLASS AND CERAMICS,**
**vol. 41, no. 7/8, juillet/août 1984, pages 319,320, Plenum Publishing Corp., New York, US; V.G. GERASIMOV et al.: "A system of automatic control of the heat regime of an electric quenching furnace"**

(73) Titulaire: **SAINT-GOBAIN VITRAGE INTERNATIONAL, 18, avenue d'Alsace, F-92400 Courbevoie(FR)**

(72) Inventeur: **Perin, Francis, La Turlurette 6, Impasse des Acacias, F-58160 Sauvigny-les-Bois(FR)**
Inventeur: **Prouveur, Hervé, Rue Pasteur, F-59111 Saint Amand(FR)**

(74) Mandataire: **Leconte, Jean-Gérard et al, Saint-Gobain Recherche 39, Quai Lucien Lefranc, F-93304 Aubervilliers Cedex(FR)**

ACTORUM AG

## Description

L'invention concerne un procédé et un dispositif permettant de contrôler l'échauffement d'une feuille de verre échauffée dans un four horizontal en vue de traitement thermique et/ou de bombage.

Il est bien connu d'utiliser pour le chauffage des feuilles de verre des fours horizontaux, dits tunnels, traversés par les feuilles convoyées sur un lit de rouleaux. Dans ces fours la feuille de verre s'échauffe progressivement et présente en sortie de four une température par exemple supérieure au point de ramollissement du verre de sorte que la feuille est alors suffisamment plastique pour être bombée et/ou trempée.

De tels fours horizontaux comportent une soie et une voûte en produits réfractaires et l'apport thermique est obtenu au moyen de résistances électriques, montées symétriquement de part et d'autre du convoyeur à rouleaux. Ces résistances sont réparties dans différentes zones longitudinales, dont le nombre varie avec la longueur du four, zones longitudinales elles-mêmes divisées en zones transversales de largeurs et longueurs égales. A titre indicatif, un four horizontal d'une longueur de 12 mètres et de 1,20 mètre de largeur peut être ainsi divisé en 5 zones longitudinales de 2,40 mètres de longueur, chacune de ces zones étant elle-même divisée en 3 zones de 0,40 mètre de largeur. De telles dimensions conviennent par exemple pour un four d'échauffement de pièces de vitrages automobiles tels que les latéraux.

Même si dans l'exemple cité à titre d'illustration, on dispose de 15 zones de résistances susceptibles de fournir 15 puissances de chauffe différentes, on constate qu'il se produit un échauffement non uniforme des feuilles de verre. Corollairement, il est très difficile de contrôler cet échauffement différencié de façon à échauffer par exemple plus fortement les zones du verre devant subir la plus forte déformation.

Cette non-uniformité du chauffage du verre ou plutôt cette incapacité à réguler celui-ci s'explique par différentes raisons. En premier lieu, elle s'explique par le rayonnement des réfractaires utilisés pour la construction de la sole et de la voûte du four, réfractaires qui réémettent la chaleur reçue au point que, dans certaines installations, à peine 45% de la chaleur reçue par le verre provient directement des résistances électriques, source première de chaleur. Ce rayonnement des réfractaires s'effectue dans toutes les directions de l'espace et a pour conséquence un nivellement des émissions de chaleur qui contrarie l'effet espéré de la différentiation des zones de chauffe. De plus, certaines zones du vitrages sont systématiquement moins échauffées que d'autres; en effet entre les zones de résistances existent des zones qui ne comportent pas de résistances et qui déterminent des zones transversales et des zones longitudinales qui ne concourent pas à l'échauffement direct du verre. Comme les zones transversales sont toutes de même largeur, il y a une bande continue parallèle au sens de défilement du verre, qui ne contribue pas directement à l'échauffement du verre. Ces zones d'ombre créent ainsi un échauffement différencié non contrôlable qui se retrouve dans la suite des opérations avec par exemple une zone de moindre trempe.

Enfin, si par une régulation très poussée on arrive à équilibrer les différents phénomènes qui, comme nous l'avons indiqué, ont des effets contraires, le four reste tout de même insatisfaisant pour certains types de vitrages. Reprenons en effet le four donné précédemment en exemple et imaginons de traiter des vitrages carrés de 50 cm de côté. Pour être réceptionné correctement par les unités de traitement placées en aval du four, le vitrage doit obligatoirement être centré ce qui signifie que systématiquement des bords circuleront dans des zones d'ombre et ne pourront pas être surchauffés. En résumé, pour atténuer certains effets néfastes dus à la difficulté de maintenir le chauffage, on peut jouer sur la position de la feuille de verre, mais on crée alors des problèmes de réception desdites feuilles de verre à la sortie du four.

Il est aussi connu du brevet US-A 3 744 985 un four pour le formage de feuilles de verre par pressage en position verticale. Ce four comporte une série de zones de chauffe réparties selon la longueur du four, chaque zone de chauffe étant elle-même divisée en 3 sous-zones verticales de même largeur, la température desdites zones et sous-zones étant régulées de façon indépendante. Dans ce type de four, les limites des sous-zones sont alignées de sorte qu'il existe une bande froide continue dont la présence était difficilement détectable du fait de l'utilisation systématique de blocs réfractaires denses dont le rayonnement réémis est sensé homogénéiser totalement la température dans le four. Par ailleurs, ce document concerne un four dit vertical qui pose des problèmes différents de positionnement des feuilles de verre.

La présente invention propose un four horizontal destiné à l'échauffement de feuilles de verre tel qu'il permette un contrôle précis de l'échauffement de la feuille de verre.

Selon l'invention, cette maîtrise de l'échauffement du verre est obtenue tout d'abord grâce à une répartition particulière des résistances électriques placées dans le four. Ces résistances sont réparties en une nappe inférieure, sous le chemin des feuilles de verre et en une nappe supérieure. Le procédé de chauffage selon l'invention est tel que, pour chaque nappe, les résistances de chauffage sont réparties en zones longitudinales et en sous-zones transversales de largeurs différentes suivant les zones longitudinales, la température de chaque zone longitudinale et plus précisément de chaque sous-zone transversale étant régulée indépendamment de la température des autres zones, deux sous-zones transversales adjacentes appartenant à des zones longitudinales différentes étant de largeurs différentes.

Une telle répartition des résistances de chauffe permet un contrôle précis de la quantité de chaleur fournie à la feuille de verre et éventuellement une modification rapide de celle-ci.

En effet, du fait que les sous-zones transversales sont de dimensions différentes les unes des autres, il n'existe plus de zones d'ombre continues parallèles à la direction d'avancement des feuilles de verre. De plus, par modulation de la température de chaque sous-zone transversale de chaque zone longitudinale, on obtient, avec seulement un petit nombre de sous-zones transversales, par exemple trois par zone longitudinale, un four de qualité supérieure aux fours à 5 ou même 7 sous-zones transversales de dimensions égales, pour ce qui concerne le problème de la régulation de la chauffe.

De plus avec un four selon l'invention, les paramètres de chauffe peuvent être aîsément modifiés, de manière asymétrique. Ainsi, si on constate au moment de l'opération de trempe et/ou de bombage qu'un seul côté du vitrage n'est pas échauffé de façon optimale, il est possible d'y remédier en ne modifiant le plus souvent que la température d'une seule sous-zone transversale.

L'invention concerne également un four d'échauffement du verre en position horizontale pour la mise en œuvre du procédé selon l'invention. Le four, traversé par un convoyeur du type lit de rouleaux, comporte une voûte et une sole supportant respectivement une nappe supérieure et une nappe inférieure de résistances électriques, réparties en zones longitudinales et en sous-zones transversales, chacune de largeurs différentes et dotées chacune de moyens de régulation de leur température.

La sole et la voûte sont de manière particulièrement préférées isolées par des réfractaires fibreux de faible densité qui permettent de maîtriser le chauffage de chaque zone, et même de chaque sous-zone de manière très précise. Un four constitué de réfractaires fibreux de faible densité a en effet une faible inertie thermique ce qui permet de modifier très rapidement les conditions de chauffage du verre.

De préférence encore, le transport des feuilles de verre au travers du four d'échauffement horizontal s'effectue sur des éléments tubulaires creux en silice vitreuse, recouverts de gaines en fils de silice tissés. De tels éléments contribuent avantageusement à un meilleur contrôle de l'échauffement des feuilles de verre.

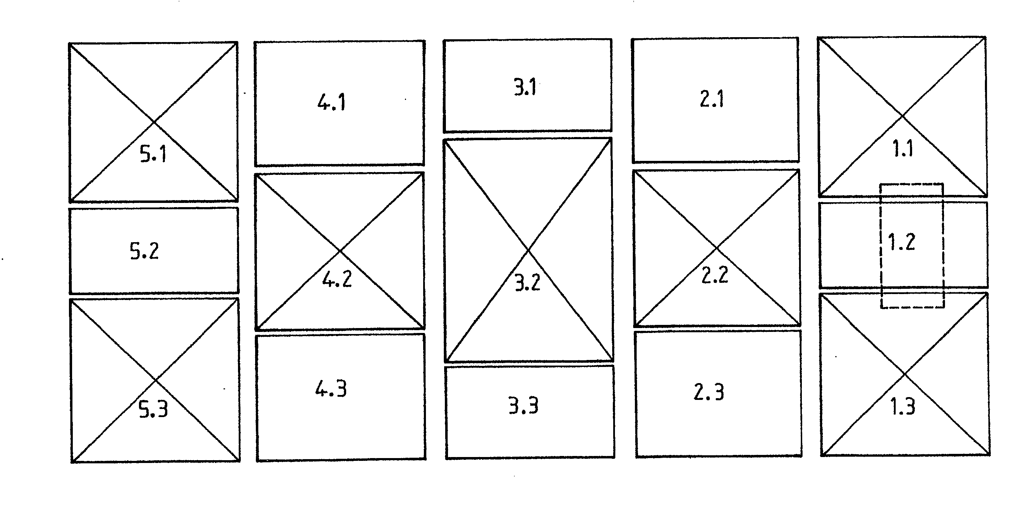

D'autres caractéristiques et avantages de l'invention apparaissent dans le description qui suit faite en référence à la planche unique annexée qui représente un schéma type de répartition des résistances de chauffe dans un four selon l'invention. Les caractéristiques de ce four sont données uniquement à titre d'illustration et ne doivent pas être comprises comme limitatives de l'invention.

L'invention s'applique à des fours de réchauffement de feuilles de verre, du type four tunnel, dans lesquels les feuilles de verre sont chargées en position horizontale et sont transportées au travers du four par un convoyeur horizontal constitué généralement par un lit de rouleaux.

De tels fours sont plus spécialement utilisés pour échauffer des feuilles de verre initialement à température ambiante jusqu'à leur température de ramollissement en vue de les bomber et/ou de les tremper. Ces traitements thermiques sont généralement les principaux responsables des défauts définitifs et en particulier des défauts optiques. Pour les minimiser, il est notamment indispensable de contrôler la température du verre en sortie de four de manière à avoir un profil de température de la feuille de verre très précis.

Dans de nombreux cas, si on désire un traitement uniforme de trempe par exemple, il est nécessaire d'avoir une température de la surface du verre parfaitement uniforme. Dans d'autres cas, si une zone du vitrage doit subir une déformation particulièrement importante, comme une pliure, ou si elle doit présenter un niveau de trempe différent de celui du reste du vitrage, il est au contraire nécessaire d'avoir des zones chauffées différemment, de manière à bien localiser les déformations.

Cette précision du profil de température de la feuille de verre est obtenue selon l'invention par la combinaison des caractéristiques développées ci-après.

Avec un tel four, une régulation relativement fine des zones de chauffage est permise. Pour celà le four est divisé par exemple en 5 zones longitudinales 1, 2, 3, 4, 5 de longueurs égales et alimentées indépendamment les unes des autres. Avec un four de 12 mètres de long dans lequel le verre défile de la zone 1 vers la zone 5, on pourra avoir ainsi successivement une zone 1 avec une puissance de chauffe de 130 kilowatts, des zones 2 et 3 de 115 kilowatts, des zones 4 et 5 de 70 kilowatts.

Chacune de ces zones longitudinales est divisée en trois sous-zones transversales de largeurs variables, allant par exemple de 200 mm pour les zones centrales 1-2 et 5-2 à 540 mm pour la zone 3-2. Pour réguler la température de chacune de ces sous-zones, la puissance fournie à chaque zone longitudinale est répartie dans les sous-zones transversales et est régulée par un régulateur type PID qui distribue la puissance dans chaque sous-zone correspondante par l'intermédiaire d'un potentiomètre de distribution de pourcentage de puissance.

Pour commander cette régulation, on utilise de préférence un microprocesseur bouclant à partir de températures captées par des thermocouples placés sur la sole et sur le voûte du four, au centre de chaque zone longitudinale.

Avec une répartition des résistances telles que représentées sur la figure, c'est à dire placées de manière telle que les lignes discontinues qui séparent les différentes sous-zones transversales constituent approximativement des losanges et en prévoyant des puissances d'alimentation relativement plus fortes dans les zones transversales marquées d'une croix sur leur diagonale que dans les zones laissées en blanc sur la figure, on obtient un très bon contrôle de l'échauffement du verre. Si les dimensions du vitrage correspondent à celles du vitrage schématisé en ligne pointillée, soit par exemple de l'ordre de 0,4 mètre de long, on choisira de préférence de maintenir les zones de résistances, 1.1, 1.3, 5.1 et 5.3 à une température relativement faible, le chauffage obtenu à l'aide des zones centrales de résistance (1.2, 2.2, 3.2, 4.2 et 5.2) étant suffisant. La conduite du four selon l'invention est donc particulièrement économique et toutes les combinaisons de température des différentes zones de résistances étant possibles, on évite que des parties du vitrage ne soient insuffisamment - ou au contraire - trop fortement chauffées.

Un tel four est particulièrement utile si des pièces de différentes tailles doivent être successivement traitées par la même installation. D'autres répartitions des zones de résistances peuvent également être utilisées, notamment si le four est chargé avec plusieurs pièces avançant de front.

Les modifications successives des paramètres de chauffe sont de plus brèves si, d'une manière préférée, le four n'est pas construit avec des briques réfractaires de grande densité, mais présente une structure métallique avec des parois internes isolées par des réfractaires fibreux. Un tel four a une très faible inertie thermique, et donc son échauffement, de même son refroidissemnt, est très rapide. Ainsi un four tunnel de par exemple 12 mètres de long et de 1,20 mètre de large destiné à échauffer des feuilles de verre jusqu'à une température voisine de 600-700°C est refroidit en moins de deux heures ce qui permet des interventions rapides pour les réparations et est remis en température en environ une heure trente, alors qu'avec des matériaux réfractaires denses de telles opérations entrainent nécessairement l'interruption de la production pendant au moins une journée.

Le chauffage est par exemple assuré par des résistances bobinées autour de tubes réfractaires de préférence en silico-alumineux. Un tel montage présente l'avantage d'être léger et donc facilement supportable par la charpente métallique du four. De plus, les éléments défectueux peuvent ainsi être remplacés très rapidement et facilement sans attendre le refroidissement du four, en raison de la bonne résistance aux chocs thermiques de tels tubes réfractaires.

Le transport des feuilles de verre au travers du four tunnel s'effectue au moyen d'un convoyeur à rouleaux, constitué par une rangée de tubes disposés parallèlement et perpendiculairement à la direction d'avancement du verre aux extrémités desquels sont collés des pignons, eux-mêmes entraînés par des chaines. Ces tubes sont de préférence des tubes creux en silice vitreuse, ce qui minimise les échanges thermiques entre le verre et le lit de rouleaux, et contribue à nouveau à une amélioration du contrôl thermique par rapport aux fours à rouleaux pleins.

De préférence les tubes du convoyeur sont gainés par un tissu en fil de silice qui d'une amortit les chocs et rend le contact plus doux entre le verre et le rouleau, et d'autre part absorbe les impuretés tels que les éventuelles poussières présentées dans le four. De plus, ce tissu réfractaire minimise lui-aussi l'échange thermique verre-rouleau.

D'une manière plus particulièrement préférée, les feuilles de verre sont chargées transversalement, comme l'indique la planche uni que, c'est à dire qu'elles sont placées avec leur plus grande longueur perpendiculaire au sens de défilement. Une telle disposition présente le double avantage de minimiser les défauts optiques, c'est à dire ceux se trouvant dans le champ de vision du conducteur lorsque ces vitrages sont montés dans une automobile et de plus à cadence égale, le four peut avoir une longueur inférieure à celle nécessaire dans le cas d'un chargement longitudinal des feuilles de verre.

Ainsi un four selon l'invention est un four compact, très facile d'entretien et dans lequel tous les éléments contribuent à une bonne maîtrise de la température d'échauffement du verre.

## Revendications

1. Procédé de chauffage de feuilles de verre en position horizontale en vue de leur bombage et/ou de leur trempe au moyen de deux nappes de résistances électriques, les nappes étant réparties de part et d'autre du chemin suivi par la feuille de verre et sur une partie de la longueur de ce chemin, et chaque nappe de résistances étant divisées en zones longitudinales indépendantes (1, 2, 3, 4, 5) ces zones longitudinales comportant des sous-zones transversales (1.1, 1.2, 1.3. 2.1, 2.2...) dont la température est régulée indépendamment de la température des autres sous-zones transversales de la même zone longitudinale, caractérisé en ce que lesdites sous-zones transversales ( 1.1, 1.2, 1.3, 2.1, 2.2...) ont des largeurs différentes suivant les zones longitudinales (1, 2, 3, 4, 5), deux sous-zones transversales adjacentes appartenant à des zones longitudinales différentes étant de largeurs différentes.

2. Procédé selon la revendication 1, caractérisé en ce que lesdites sous-zones transversales (1.1, 1.2, 1.3, 2.1, 2.2...) sont disposées de façon à ce que les lignes de séparation entre les sous-zones transversales constituent approximativement des losanges.

3. Dispositif de chauffage de feuilles de verre en position horizontale, constitué d'un four qui comporte une nappe supérieure et une nappe inférieure de résistances électriques placée respectivement au-dessus et au-dessous du convoyeur pour feuilles de verre traversant le four, lesdites résistances électriques de chaque nappe étant réparties en zones longitudinales (1, 2, 3, 4, 5) dotées de moyens de régulation de leur température, caractérisé en ce que chaque zone longitudinale comporte des sous-zones transversales (1.1, 1.2, 1.3, 2.1, 2.2...) ayant leur largeur propre en fonction de la position dans le four de la zone longitudinale à laquelle elle appartient et étant dotée de moyens de régulation de sa température.

4. Dispositif selon la revendication 3, caractérisé en ce que lesdits moyens de régulation de la température des sous-zones transversales (1.1, 1.2, 1.3, 2.1, 2.2...) sont des moyens de régulation de la puissance totale fournie à chaque zone longitudinale.

5. Dispositif selon l'une des revendications précédentes, caractérisé en ce qu'il comporte une charpente métallique, une sole et une voûte isolées par des réfractaires fibreux.

6. Dispositif selon l'une des revendications 3 à 5, caractérisé en ce que les résistances électriques sont bobinées autour de tubes réfractaires en silico-aluminium.

7. Dispositif selon l'une des revendications 3 à 6, caractérisé en ce que le convoyeur pour feuilles de verre est constitué par un lit de rouleaux formés d'éléments tubulaires creux.

8. Dispositif selon la revendication 7, caractérisé en ce que lesdits éléments tubulaires creux sont en silice vitreuse.

9. Dispositif selon l'une des revendications 3 à 8, caractérisé en ce que les éléments du convoyeur sont gainés avec un tissu en fil de silice.

10. Application du four selon une des revendications 3 à 6 à l'échauffement de feuilles de verre en vue de leur trempe et/ou de leur bombage, caractérisée en ce que les feuilles de verre sont introduites dans le four en ayant leur plus grande longueur perpendiculaire au sens de défilement.

## Patentansprüche

1. Verfahren zum Erwärmen von Glasscheiben in horizontaler Lage zum Biegen und/oder Vorspannen mittels zweier elektrischer Widerstandsflächen, die beiderseits des Weges und auf einem Teil der Weglänge angeordnet sind, dem die Glasscheibe folgt, wobei jede Widerstandsfläche in unabhängige longitudinale Zonen (1, 2, 3, 4, 5) unterteilt ist, die wiederum transversale Unterzonen 1.1, 1.2, 1.3, 2.1, 2.2...) umfassen, deren Temperatur unabhängig von der Temperatur der anderen transversalen Unterzonen derselben longitudinalen Zone regelbar ist, dadurch gekennzeichnet, daß die transversalen Unterzonen (1.1, 1.2, 1.3, 2.1, 2.2...) von unterschiedlicher Größe entlang der longitudinalen Zonen (1, 2, 3, 4, 5) sind, wobei zwei benachbarte transversale Unterzonen, die zu verschiedenen longitudinalen Zonen gehören, von unterschiedlicher Größe sind.

2. Verfahren nach Anspruch 1, dadurch gekennzeichnet, daß die transversalen Unterzonen (1.1, 1.2, 1.3, 2.1, 2.2...) so angeordnet sind, daß die Trennungslinien zwischen den transversalen Unterzonen annähernd Rauten bilden.

3. Vorrichtung zum Erwärmen von Glasscheiben in horizontaler Lage, bestehend aus einem Ofen, der eine obere und eine untere elektrische Widerstandsfläche aufweist, die jeweils oberhalb und unterhalb des Förderers für die Glasscheiben, die den Ofen durchqueren, angeordnet sind, wobei die elektrischen Widerstände jeder Fläche auf longitudinale Zonen (1, 2, 3, 4, 5) aufgeteilt sind, die mit Mitteln zur Regulierung ihrer Temperatur ausgestattet sind, dadurch gekennzeichnet, daß jede longitudinale Zone transversale Unterzonen (1.1, 1.2, 1.3, 2.1, 2.2...) umfaßt, die eine Größe aufweisen, die abhängig ist von der Lage der zugehörigen longitudinalen Zone im Ofen und die mit Mitteln zu ihrer Temperaturregelung ausgestattet sind.

4. Vorrichtung nach Anspruch 3, dadurch gekennzeichnet, daß die Mittel zur Temperaturregelung der transversalen Unterzonen (1.1, 1.2, 1.3, 2.1, 2.2...) Mittel zur Regelung der jeder longitudinalen Zone gelieferten Gesamtleistung sind.

5. Vorrichtung nach einem der vorhergehenden Ansprüche, dadurch gekennzeichnet, daß sie ein metallisches Gerüst, eine Grundplatte und ein Gewölbe umfaßt, die durch feuerfeste Fasern isoliert sind.

6. Vorrichtung nach einem der Ansprüche 3 bis 5, dadurch gekennzeichnet, daß die elektrischen Widerstände um feuerfeste Rohre aus Silico-Aluminium gewickelt sind.

7. Vorrichtung nach einem der Ansprüche 3 bis 6, dadurch gekennzeichnet, daß der Förderer für die Glasscheiben aus einem Rollenbett besteht, das aus hohlen Röhrenelementen gebildet ist.

8. Vorrichtung nach Anspruch 7, dadurch gekennzeichnet, daß die hohlen Röhrenelemente aus glasartigem Siliciumoxid bestehen.

9. Vorrichtung nach einem der Ansprüche 3 bis 8, dadurch gekennzeichnet, daß die Elemente des Förderers mit einem Gewebe aus Quarzfasern überzogen sind.

10. Verwendung des Ofens gemäß einem der Ansprüche 3 bis 6 zur Erwärmung von Glasscheiben zum Biegen und/oder Vorspannen, dadurch gekennzeichnet, daß die Glasscheiben so in den Ofen eingeführt werden, daß ihre größte Länge rechtwinklig zur Förderrichtung verläuft.

## Claims

1. A method of heating sheets of glass in a horizontal position for the purpose of curving and/or tempering them, by means of two layers of electrical resistors, the layers being distributed on either side of the path followed by the glass sheet and on a portion of the length of this path, and each layer of resistors being divided into independent longitudinal zones (1, 2, 3, 4, 5), these longitudinal zones comprising transverse sub-zones (1.1, 1.2, 1.3, 2.1, 2.2...), the temperature of which is regulated independently of the temperature of the other transverse sub-zones of the same longitudinal zone, characterized in that said transverse sub-zones (1.1, 1.2, 1.3, 2.1, 2.2...) have different widths according to the longitudinal zones (1, 2, 3, 4, 5), two adjacent transverse sub-zones belonging to different longitudinal zones being of different widths.

2. A method according to Claim 1, characterized in that said transverse sub-zones (1.1, 1.2, 1.3, 2.1, 1.2...) are disposed in such a manner that the separation lines between the transverse sub-zones constitute approximately diamond-shapes.

3. Apparatus for heating sheets of glass in a horizontal position, constituted of a furnace which comprises an upper layer and a lower layer of electrical resistors, placed respectively above and below the conveyor for glass sheets passing through the furnace, said electrical resistors of each layer being divided into longitudinal zones (1, 2, 3, 4, 5) equipped with means for regulating their temperature, characterized in that each longitudinal zone comprises transverse sub-zones (1.1, 1.2, 1.3, 2.1, 2.2...) having their own width as a function of the position in the furnace of the longitudinal zone to which they belong and being equipped with means for regulating its temperature.

4. Apparatus according to Claim 3, characterized in that said means for regulating the temperature of the transverse subzones (1.1, 1.2, 1.3, 2.1, 2.2...) are means for regulating the total power supplied to each longitudinal zone.

5. Apparatus according to one of the preceding Claims, characterized in that it comprises a metal frame, a hearth and a vault insulated by fibrous refractories.

6. Apparatus according to one of Claims 3 to 5, characterized in that the electrical resistors are wound around refractory tubes of silico-aluminium.

7. Apparatus according to one of Claims 3 to 6, characterized in that the conveyor for glass sheets is composed of a bed of rollers formed of hollow tubular elements.

8. Apparatus according to Claim 7, characterized in that said hollow tubular elements are of vitreous silica.

9. Apparatus according to one of Claims 3 to 8, characterized in that the elements of the conveyor are sheathed with a fabric of silica thread.

10. Application of the furnace according to one of Claims 3 to 6 to the heating of glass sheets for the purpose of tempering and/or curving them, characterized in that the glass sheets are introduced into the furnace with their greater dimension perpendicular to the direction of travel.